# EUROPEAN PATENT APPLICATION

(11) **EP 4 431 978 A2**
(43) Date of publication of application: **18.09.2024**
(21) Application number: 24162456.8
(22) Date of filing: 08.03.2024
(51) Int. Cl.: G01S 7/4865, G01S 17/10

(54) **DEPTH MAPPING WITH DUAL-FREQUENCY DIRECT TIME-OF-FLIGHT**

(30) Priority: 13.03.2023 US 202363451890 P; 28.03.2023 US 202363455030 P; 26.02.2024 US 202418587102
(71) Applicant: Meta Platforms Technologies, LLC, Menlo Park, CA 94025 (US)
(72) Inventor: Egea, Sergio, Menlo Park (US); Ronchini Ximenes, Augusto, Menlo Park (US)
(74) Representative: Murgitroyd & Company

(57) **Abstract**

Time-of-Flight (TOF) light pulses are emitted at a first temporal pulsing frequency and a second temporal pulsing frequency. ToF return signals are detected by a light detector of a ToF sensor and a wrapped histogram may be generated. As part of generating unwrapped histograms, a selected index may be identified to provide a ToF distance from ToF distances of the ToF return signals.

## Description

### TECHNICAL FIELD

This disclosure relates generally to optics, and in particular to time-of-flight (ToF).

### BACKGROUND INFORMATION

Direct time-of-flight (dToF) technology is based on measuring the time it takes an emitted signal to propagate to an object or target (in an environment) and return back to a sensor. The sensor may be co-located with an emitter (e.g. a laser) that emits the signal. In some contexts, short light pulses are used as the emitted signal. Application that may include dToF include robotics, gaming, vehicle ranging systems, or otherwise.

### SUMMARY

According to an aspect, there is provided a Time-of-Flight (ToF) method comprising:
emitting ToF light pulses at a first temporal pulsing frequency and a second temporal pulsing frequency;
calculating a ToF distance corresponding to a time between emitting a particular ToF light pulse and receiving a ToF return signal with a light detector;
generating an axis-intercept value by projecting the ToF distance onto a plot having a first axis representing first normalized distances of the first temporal pulsing frequency and a second axis representing second normalized distances of the second temporal pulsing frequency;
identifying a selected index corresponding to the axis-intercept value; and
providing the ToF distance to the selected index to retrieve a final ToF distance from the selected index.

The second temporal pulsing frequency may not be colinear with the first temporal pulsing frequency.

The selected index may represent a doublet combination of a first integer wrap of the first temporal pulsing frequency and a second integer wrap of the second temporal pulsing frequency wrap.

Generating the axis-intercept value include:
generating a first value by multiplying a first-axis component of the ToF distance with a multiplier factor that is a ratio of a first multiplier and a second multiplier that are greatest common divisor of a beat frequency of the ToF light pulses; and
subtracting the first value from a second-axis component of the ToF distance to generating the axis-intercept value.

Identifying the selected index corresponding to the axis-intercept value may include:
subtracting the axis-intercept value by a range minimum of the second axis to generate a y-value;
dividing the y-value by a delta between projections of different indexes to generate a first value;
rounding the first value to a nearest integer to generate a second value; and
adding one to the second value to generate the selected index,
and/or wherein the selected index includes a lookup table having distances corresponding to normalized ToF distances.

The method may further comprise generating a ToF image corresponding to the final ToF distance.

The method may further comprise fusing the ToF image with a visible light image captured by a complementary metal-oxide semiconductor (CMOS) image sensor.

The method may further comprise rendering an image to a head-mounted display in response to the final ToF distance.

The light detector may include a single-photon avalanche diode (SPAD).

According to another aspect, there is provided a Time-of-Flight (ToF) system comprising:
an illumination module configured to emit ToF light pulses at a first temporal pulsing frequency and a second temporal pulsing frequency;
a ToF sensor configured to detect ToF return signals of the ToF light pulses reflecting back to the ToF sensor; and
processing logic configured to:
   calculate a ToF distance corresponding to a time between emitting a particular ToF light pulse and receiving the ToF return signals with the ToF sensor;
   generate an axis-intercept value by projecting the ToF distance onto a plot having a first axis representing first normalized distances of the first temporal pulsing frequency and a second axis representing second normalized distances of the second temporal pulsing frequency;
   identify a selected index corresponding to the axis-intercept value; and
   provide the ToF distance to the selected index to retrieve a final ToF distance from the selected index.

According to a further aspect, there is provided a method of generating a depth map, the method comprising:
emitting ToF light pulses at a first temporal pulsing frequency and a second temporal pulsing frequency;
capturing ToF return signals with light detectors of a macropixel to generate wrapped histograms, wherein first light detectors of the macropixel are sampled at the first temporal pulsing frequency, and wherein second light detectors of the macropixel are sampled at the second temporal pulsing frequency;
unwrapping the wrapped histograms of the macropixel to generate unwrapped histograms; and
interpolating the unwrapped histograms into depth maps of a scene that the ToF light pulses were emitted into.

The first light detectors and the second light detectors may share their wrapped histograms to halve the ToF light pulses that are emitted to populate the wrapped histograms.

The macropixel may have a side represented by integer *n* of the light detectors. The unwrapped histograms that are shared by the first light detectors and the second light detectors may be (*n*^2)/2.

The method may further comprise:
detecting a signal-to-noise ratio (SNR) of the TOF return signals; and
increasing a size of the macropixel when the SNR is below a pre-determined threshold value.

The depth map may be of a native resolution of a sensor that includes the light detectors.

The first light detectors may be adjacent to the second light detectors of the micropixel.

The first light detectors may be disposed diagonally from each other in the micropixel. The second light detectors may be disposed diagonally from each other in the macropixel.

Unwrapping the wrapped histograms may include converting wrapped depth values generated from the ToF return signals into continuous depth values.

The wrapped histograms of the first light detectors may include a first integer-number of bins. The wrapped histograms of the second light detectors may include a second integer-number of bins that is different than the first integer-number of bins.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Non-limiting and non-exhaustive embodiments of the invention are described with reference to the following figures, wherein like reference numerals refer to like parts throughout the various views unless otherwise specified.
FIG. 1 illustrates a head-mounted display (HMD) that may include a dual-frequency direct Time-of-Flight (dToF) system.
FIG. 2 illustrates an example dual-frequency dToF system for generating depth maps of an environment.
FIG. 3 illustrates an example illustration of a ToF sensor that includes an array of pixels arranged in rows and columns.
FIGs. 4A-4D illustrate different histograms corresponding to different macropixels of a pixel group.
FIGs. 5A-5B illustrate an implementation where the macropixel is expanded in size from the macropixel size of FIGs. 4A-4D.
FIGs. 6A-6D illustrate different histograms corresponding to a rolling shutter approach.
FIGs. 7A-7D illustrate different histograms corresponding to a rolling shutter approach with a larger macropixel.
FIG. 8 illustrates a flow chart of an example process of generating a depth map.
FIG. 9 illustrates a flow chart of an example process of generating a ToF distance.
FIG. 10 shows an equation providing a relationship between a wrapping distance, a time period, and the speed of light.
FIG. 11 illustrates a plot of a number of wraps for a given beat distance.
FIG. 12 illustrates a plot illustrating normalized wrapped distances.
FIG. 13 illustrates a table showing doublet combinations of integers for Frequency 1 wraps and Frequency 2 wraps.
FIG. 14 illustrates a plot of a projection of the lines of FIG. 12 onto an axis.
FIG. 15 illustrates a plot of Indexes corresponding to projected lines.
FIG. 16 provides an equation for calculating an axis-intercept value for a point.
FIG. 17 provides an equation for calculating the Index to be selected and used for unwrapping the distance represented by a point.
FIG. 18 includes a table having Indexes corresponding with wraps.
FIG. 19 provides an example equation for generating a distance according to a weighted sum.
FIG. 20 provides an equation for generating a confidence value for a given distance measurement.

### DETAILED DESCRIPTION

Embodiments of depth mapping with dual-frequency direct Time-of-Flight (dToF) are described herein. In the following description, numerous specific details are set forth to provide a thorough understanding of the embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In accordance with this disclosure, visible light may be defined as having a wavelength range of approximately 380 nm - 700 nm. Non-visible light may be defined as light having wavelengths that are outside the visible light range, such as ultraviolet light and infrared light. Infrared light having a wavelength range of approximately 700 nm - 1 mm includes near-infrared light. Near-infrared light may be defined as having a wavelength range of approximately 700 nm - 1.6 µm.

In accordance with this disclosure, the term "transparent" may be defined as having greater than 90% transmission of light. The term "transparent" may be defined as a material having greater than 90% transmission of visible light.

Systems that include dToF technology use a certain temporal range (that provides the unwrapping distance) that is sampled with a certain number of bins (time intervals) to make a histogram. In order to produce a histogram that is able to detect the echo, a number of bins need to be large enough to have sufficient signal. However, that large bins may reduce the precision and accuracy of the system.

In accordance with embodiments this disclosure, two frequencies are used in a dToF system to provide a longer time interval (provided by the beat frequency) and higher accuracy and precision for the same number of bins. A confidence value of the measurement may be calculated to increase the precision.

Another challenge faced by dToF systems is the memory storage and computational costs of storing and processing histograms. When a global shutter is used, the challenge is particularly acute since the memory cannot be reused until a frame is processed.

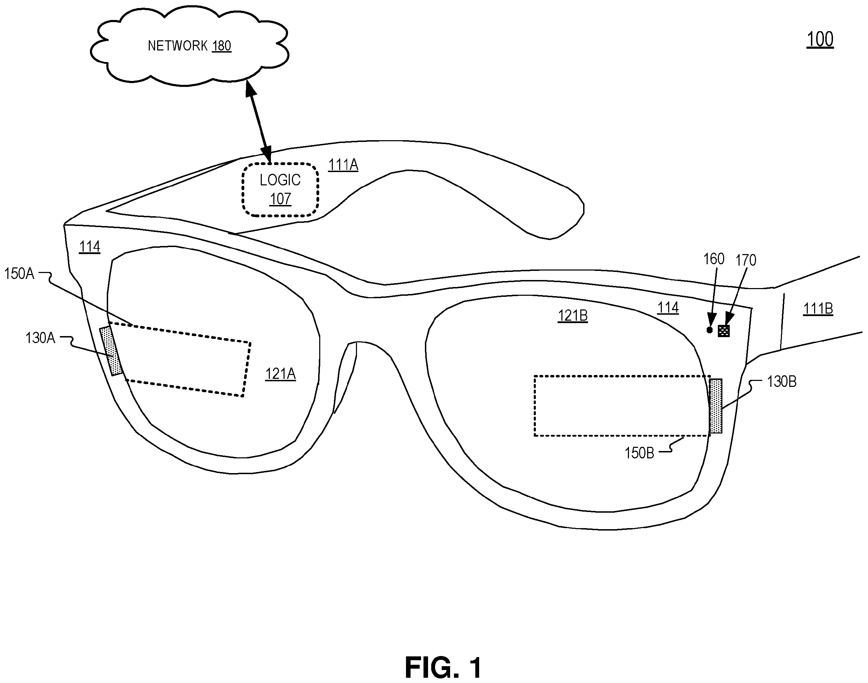

In accordance with embodiments of this disclosure, a mosaic of pixels at two different frequencies can capture the two different frequencies that can be unwrapped to reduce the memory and produce an interpolated depth map. The two different frequencies may include either using a different number of bins or different bin widths for the pixels capturing return signals at the different frequencies. In some implementations, the reduction of memory is achieved by different pixels of a sensor sharing their histograms, where the different pixels capture return signals (the echo of the ToF signal) at different frequencies. Sharing of histograms in this manner may allow the number of ToF pulses to be reduced (e.g. half of the pulses), in some implementations. These and other implementations are described in more detail in connection with FIGs. 1-20.

FIG. 1 illustrates a head-mounted display (HMD) 100 that may include a dual-frequency direct Time-of-Flight (dToF) system. The dual-frequency dToF system may be used to map an environment that a user of the HMD is in. HMD 100 includes frame 114 coupled to arms 111A and 111B. Lens assemblies 121A and 121B are mounted to frame 114. Lens assemblies 121A and 121B may include a prescription lens matched to a particular user of HMD 100. The illustrated HMD 100 is configured to be worn on or about a head of a wearer of HMD 100.

In the HMD 100 illustrated in FIG. 1, each lens assembly 121A/121B includes a waveguide 150A/150B to direct image light generated by displays 130A/130B to an eyebox area for viewing by a user of HMD 100. Displays 130A/130B may include a beam-scanning display or a liquid crystal on silicon (LCOS) display for directing image light to a wearer of HMD 100 to present virtual images, for example.

Lens assemblies 121A and 121B may appear transparent to a user to facilitate augmented reality (AR) or mixed reality (MR) to enable a user to view scene light from the environment around them while also receiving image light directed to their eye(s) by, for example, waveguides 150. Lens assemblies 121A and 121B may include two or more optical layers for different functionalities such as display, eye-tracking, and optical power. In some embodiments, image light from display 130A or 130B is only directed into one eye of the wearer of HMD 100. In an embodiment, both displays 130A and 130B are used to direct image light into waveguides 150A and 150B, respectively. The implementations of the disclosure may also be used in head-mounted devices (e.g. smartglasses) that don't necessarily include a display but are configured to be worn on or about a head of a wearer. The implementations of the disclosure may also be used in a virtual reality (VR) HMD where the dToF system is used to map the environment that a user is in.

Frame 114 and arms 111 may include supporting hardware of HMD 100 such as processing logic 107, a wired and/or wireless data interface for sending and receiving data, graphic processors, and one or more memories for storing data and computer-executable instructions. Processing logic 107 may include circuitry, logic, instructions stored in a machine-readable storage medium, ASIC circuitry, FPGA circuitry, and/or one or more processors. In one embodiment, HMD 100 may be configured to receive wired power. In one embodiment, HMD 100 is configured to be powered by one or more batteries. In one embodiment, HMD 100 may be configured to receive wired data including video data via a wired communication channel. In one embodiment, HMD 100 is configured to receive wireless data including video data via a wireless communication channel. Processing logic 107 may be communicatively coupled to a network 180 to provide data to network 180 and/or access data within network 180. The communication channel between processing logic 107 and network 180 may be wired or wireless.

In the illustrated implementation of FIG. 1, HMD 100 includes an illumination module 160 and a dToF sensor 170. Illumination module 160 may illuminate an environment with dToF pulses and dToF sensor 170 may capture return signals of the dToF signals reflecting (or scattering) from targets or objects in the environment. In some implementations, an HMD or other device may include a plurality of illumination modules 160 and dToF sensors 170.

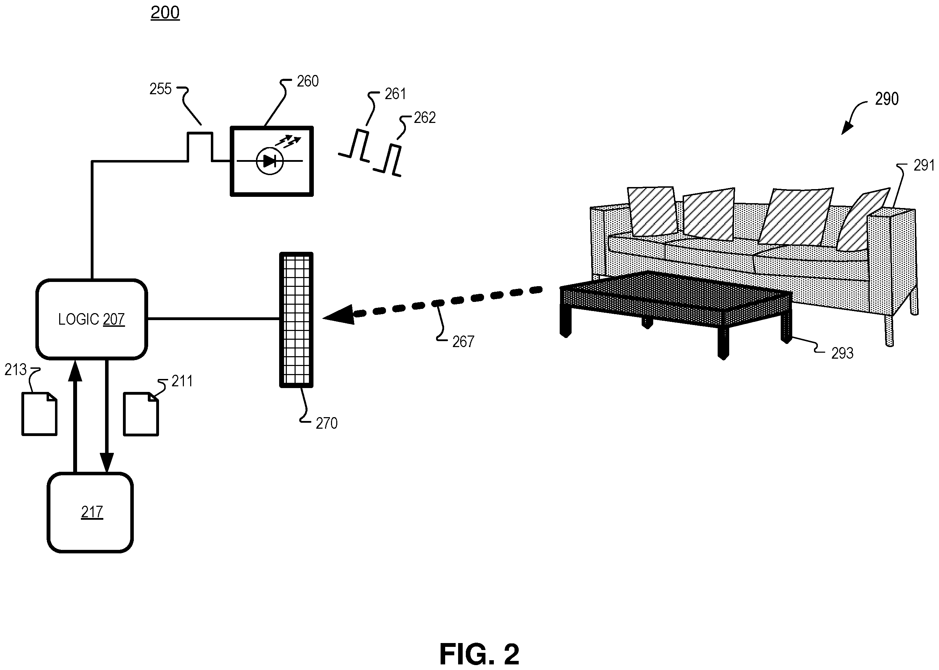

FIG. 2 illustrates an example dual-frequency dToF system 200 for generating depth maps of an environment 290. System 200 may be included in an HMD, smartglasses, or other contexts such as robotics and/or gaming. In the illustration of FIG. 2, environment 290 includes a couch 291 (with striped throw pillows) situated with a coffee table 293.

System 200 includes an illumination module 260, a dToF sensor 270, processing logic 207, and a memory 217. In some implementations, illumination module 260 may illuminate environment 290 with pulsed near-infrared illumination light. Illumination module 260 may include one or more light sources that generate the light pulses that are used to illuminate some or all environment 290. Illumination module 260 may include one or more lasers or LEDs as light sources to generate illumination light. In some implementations, each light source and/or groups of light sources are addressable (i.e., may be controlled independent from other light sources and/or groups of light sources). In some implementations, the illumination module 260 may also include an optical assembly that can be used to direct light from illumination module 260 to specific regions within the environment 290. In some implementations, illumination module 260 may emit flood illumination, a pattern (e.g., dots, bars, etc.), or some combination thereof. Illumination module 260 may be configured to generate ToF light pulses in response to a driving signal 255 received from processing logic 207.

In the illustrated example, illumination module 260 emits ToF light pulses at a first temporal pulsing frequency 261 and a second temporal pulsing frequency 262. The second temporal pulsing frequency is not colinear with the first temporal pulsing frequency. In some implementations, illumination module 260 emits light pulsed at different frequencies in an interleaved matter. By way of example, a first temporal pulsing frequency may be 50 MHz and a second temporal pulsing frequency may be 70 MHz which corresponds to wrapping distances of 3.00 m and 2.14 m, respectively. The frequencies are selected based in part on the total distance that is required to unwrap. For 50 MHz and 70 MHz, the total unwrapping distance would be 14.98m. The beat frequency in this example may be 10 MHz since it is the greatest common divisor of the frequencies 50 MHz and 70 MHz.

Illumination module 260 is communicatively coupled with processing logic 207. Processing logic 207 is communicatively coupled with memory 217, in FIG. 2. Memory 217 may include lookup tables to assist in generating ToF distances, in some implementations. Processing logic 207 is communicatively coupled to ToF sensor 270. ToF sensor 270 may be co-located with illumination module 260 and configured to capture ToF return signals 267 that are reflected (or scattered) from objects in the environment 290. In the context of this disclosure, "co-located" may be defined as being disposed closer than 5 mm from each other.

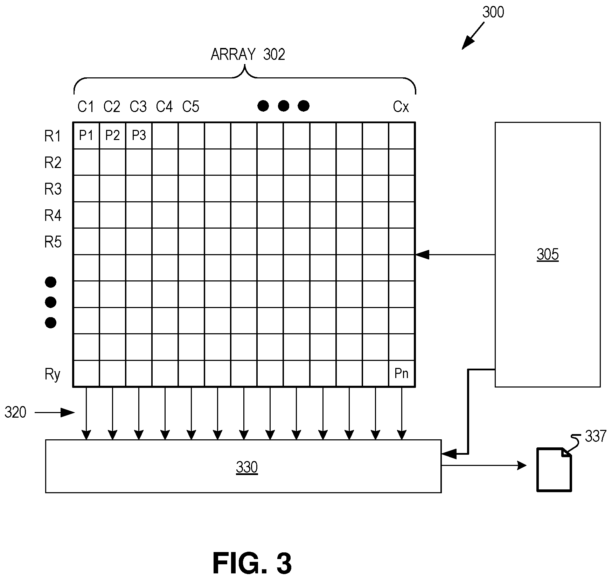

ToF sensor 270 may include a two-dimensional (2D) array of photodetector pixels. The photodetectors may be single-photon avalanche diodes (SPAD). FIG. 3 illustrates an example illustration of a ToF sensor 300 that includes a 2D array 302 of *n* pixels (P1, P2, P3....Pₙ) arranged in *x* columns (C1, C2, C3, C4, C5...Cₓ) and *y* rows (R1, R2, R3, R4, R5...C_{y}). Controller circuitry 305 drives 2D array 302 to capture images of ToF return signals (e.g. ToF return signals 267) incident on the pixels. Controller circuitry 305 may drive different pixels in the 2D array 302 to capture the ToF signals at different frequencies. Readout circuitry 330 is configured to readout 2D array 302 by way of readout lines 320. Readout circuitry 330 generates image data 337 from the image signals received by readout circuitry 330. In some implementations, a near-infrared filter that receives a narrow-band near-infrared wavelength may be placed over the 2D array 302 so it is sensitive to the particular narrow-band near-infrared wavelength while rejecting visible light and wavelengths outside the narrow-band. The near-infrared filter may be matched to light sources in illumination modules 160/260 so that only the specific wavelength of the ToF light pulses (and their return signals) are imaged by 2D array 302.

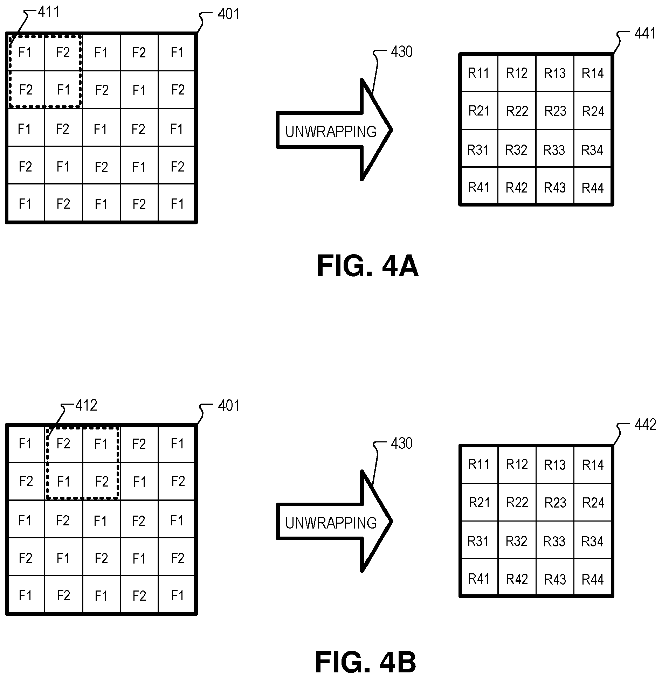

FIGs. 4A-4D illustrate different histograms corresponding to different macropixels of a pixel group 401. The examples illustrated in FIGs. 4A-4D may be captured with a global shutter. Pixel group 401 may include a portion of the pixels in 2D array 302 that may receive ToF return signals 267, for example. In the illustration of FIG. 4A, a macropixel 411 includes four light detectors arranged in a 2 x 2 matrix. First light detectors of macropixel 411 are sampled at a first temporal pulsing frequency (F1) and second light detectors of macropixel 411 are sampled at a second temporal pulsing frequency (F2). Thus, macropixel 411 includes two of the first light detectors and two of the second light detectors. The first light detectors are adjacent to the second light detectors. In the particular illustration of pixel group 401, the first light detectors are disposed diagonally from each other in macropixel 411 and the second light detectors are also disposed diagonally from each other in the macropixel 411. The arrangement of the first light detectors sampled at the first temporal pulsing frequency (F1) with the second light detectors sampled at the second temporal pulsing frequency (F2) may be considered a checker-board pattern.

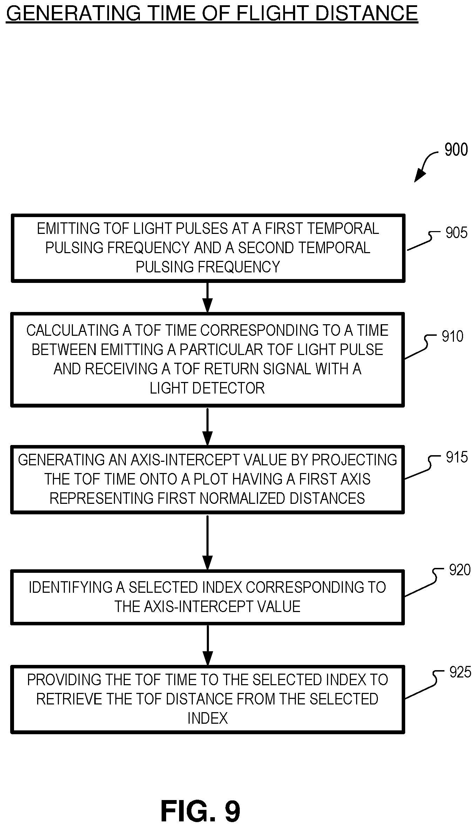

In FIG. 4A, macropixel 411 has a wrapped histogram including the depth values for the four light detectors of macropixel 411. An unwrapping function 430 generates unwrapped histogram 441 that includes four possible unwrapping values for interpolation in order to generate a depth map with continuous depth values. An example unwrapping function for dual-frequency ToF systems will be described in more detail below with respect to FIGs. 9-20.

In FIG. 4B, macropixel 412 has a wrapped histogram including the depth values for the four light detectors of macropixel 412. The unwrapping function 430 generates unwrapped histogram 442 that includes four possible unwrapping values for interpolation in order to generate a depth map with continuous depth values. Notably, macropixel 412 includes overlapping light detectors with macropixel 411.

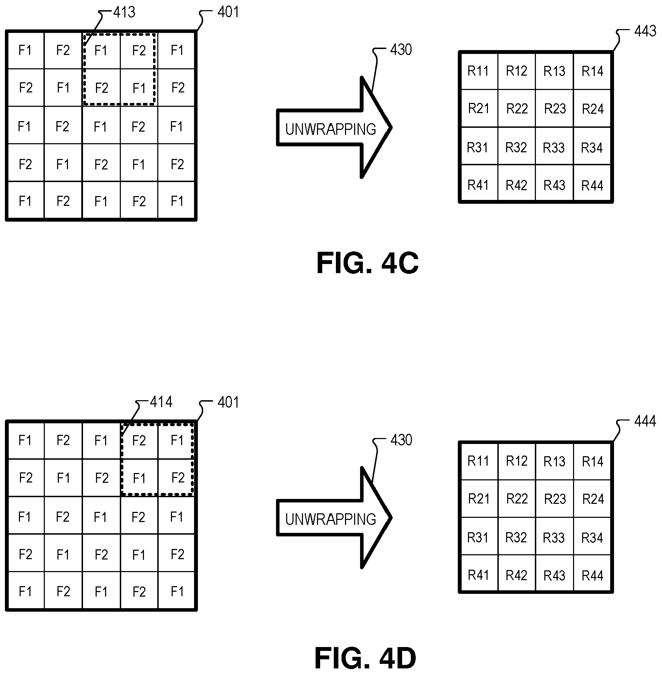

In FIG. 4C, macropixel 413 has a wrapped histogram including the depth values for the four light detectors of macropixel 413. The unwrapping function 430 generates unwrapped histogram 443 that includes four possible unwrapping values for interpolation in order to generate a depth map with continuous depth values. Notably, macropixel 412 includes overlapping light detectors with macropixel 411 and macropixel 413.

In FIG. 4D, macropixel 414 has a wrapped histogram including the depth values for the four light detectors of macropixel 414. The unwrapping function 430 generates unwrapped histogram 444 that includes four possible unwrapping values for interpolation in order to generate a depth map with continuous depth values. Notably, macropixel 413 includes overlapping light detectors with macropixel 412 and macropixel 414.

As stated above the first light detectors of a given macropixel are sampled at the first temporal pulsing frequency (F1) and the second light detectors of the macropixel are sampled at the second temporal pulsing frequency (F2). To achieve these different sampling frequencies, the wrapped histograms of the first light detectors may include first bin widths and the wrapped histograms of the second light detectors include second bin widths that are different from the first bin widths. In another implementations, the wrapped histograms of the first light detectors include a first integer-number of bins and the wrapped histograms of the second light detectors include a second integer-number of bins that is different than the first integer-number of bins.

In the examples illustrated by FIGs. 4A-4D, the native resolution of a ToF sensor can be recovered with the four possible unwrapping values that assist in interpolation. This approach produces high resolution with half the memory usage with the tradeoff of increased power consumption due to the increased (4x) unwrapping operations and interpolation.

In some implementations consistent with FIGs. 4A-4D, the first light detectors (F1) and second light detectors (F2) of a given macropixel share their wrapped histograms. By sharing their wrapped histograms the number of required ToF light pulses (that are emitted by the illumination module to populate the wrapped histograms) may be halved.

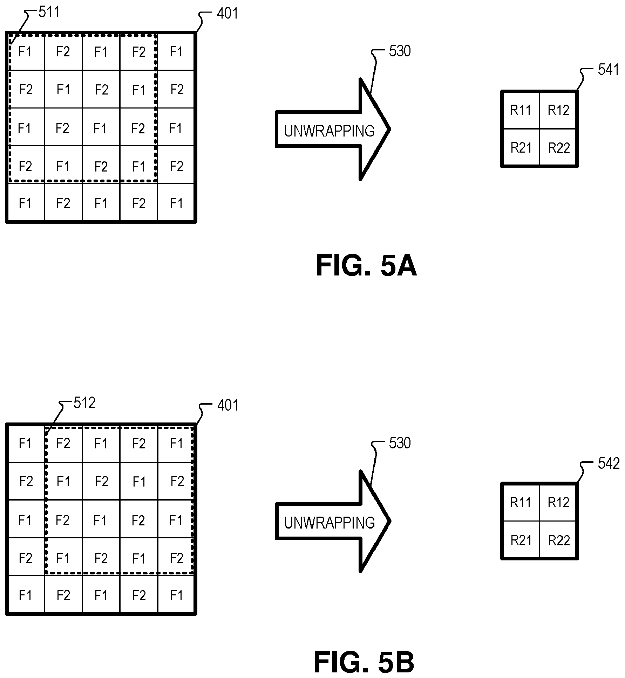

FIGs. 5A-5B illustrate an implementation where the macropixel is expanded in size from the macropixel size of FIGs. 4A-4D. In FIGs. 4A-4D macropixels 411, 412, 413, and 414 were sized to 2 x 2 macropixels. In FIGs. 5A-5B, the macropixels are sized to 4 x 4. Optionally, a signal-to-noise ratio (SNR) of ToF return signals may be detected and the size of the macropixel may be increased in size when the SNR is below a pre-determined threshold value. FIGs. 5A-5B show that the macropixel may be dynamically reprogrammed from a 2 x 2 to a 4 x 4, in some implementations. When the macropixel has a side represented by integer *n* light detectors, the unwrapped histograms that are shared by the first light detectors and the second light detectors is (*n*^2)/2. Hence, the unwrapped histograms that are shared by the first light detectors and the second light detectors for the 4 x 4 macropixel 511 in FIG. 5A, may be eight.

In FIG. 5A, macropixel 511 has a wrapped histogram including the depth values for the sixteen light detectors of macropixel 511. An unwrapping function 530 generates unwrapped histogram 541. In FIG. 5B, macropixel 512 has a wrapped histogram including the depth values for the sixteen light detectors of macropixel 512. Unwrapping function 530 generates unwrapped histogram 542.

By way of example, a ToF sensor with native Video Graphics Array (VGA) resolution of 640 pixels by 480 pixels would have native resolution with 1 × 1 histograms. A ToF sensor with VGA resolution with a 2 x 2 macropixel would have quarter-native VGA resolution or native VGA resolution with interpolation. A ToF sensor with VGA resolution with a 4 x 4 macropixel would have quarter-native VGA resolution with interpolation or 1/8 native VGA resolution.

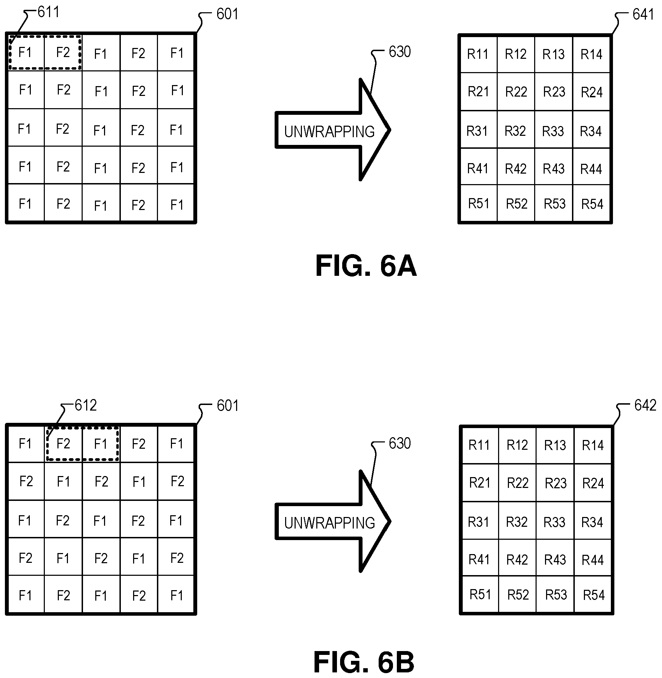

FIGs. 6A-6D illustrate different histograms corresponding to a rolling shutter approach using different macropixels of a pixel group 601. Pixel group 601 may include a portion of the pixels in 2D array 302 that may receive ToF return signals 267, for example. In the illustration of FIG. 6A, a macropixel 611 includes two light detectors arranged in a 1 x 2 matrix. The first light detector of macropixel 611 is sampled at a first temporal pulsing frequency (F1) and the second light detector of macropixel 611 is sampled at a second temporal pulsing frequency (F2). The first light detector is adjacent to the second light detector. In the particular illustration of pixel group 601, the first light detectors are arranged in lines that are adjacent to lines of the second light detectors to facilitate the rolling shutter image capture technique. The lines may be rows or columns, although the lines are illustrated as columns in FIGs. 6A-6D. In some implementation, the wrapped histograms of the first light detectors includes first bin widths and the wrapped histograms of the second light detectors include second bin widths that are different from the first bin widths. In some implementations, the wrapped histograms of the first light detectors include a first integer-number of bins and the wrapped histograms of the second light detectors include a second integer-number of bins that is different than the first integer-number of bins.

In FIG. 6A, macropixel 611 has a wrapped histogram including the depth values for the two light detectors of macropixel 611. An unwrapping function 630 generates unwrapped histogram 641. In the approach illustrated in FIGs. 6A-6D, one unwrapping value can be produced by the unit cell to provide an almost native resolution of the ToF sensor.

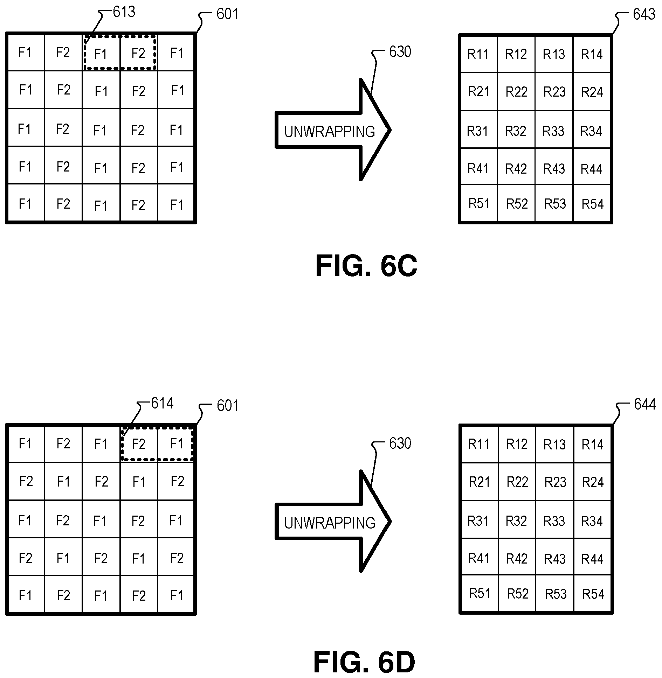

In FIG. 6B, macropixel 612 has a wrapped histogram including the depth values for the two light detectors of macropixel 612. The unwrapping function 630 generates unwrapped histogram 642. In FIG. 6C, macropixel 613 has a wrapped histogram including the depth values for the two light detectors of macropixel 613. The unwrapping function 630 generates unwrapped histogram 643. In FIG. 6D, macropixel 614 has a wrapped histogram including the depth values for the two light detectors of macropixel 614. The unwrapping function 630 generates unwrapped histogram 644.

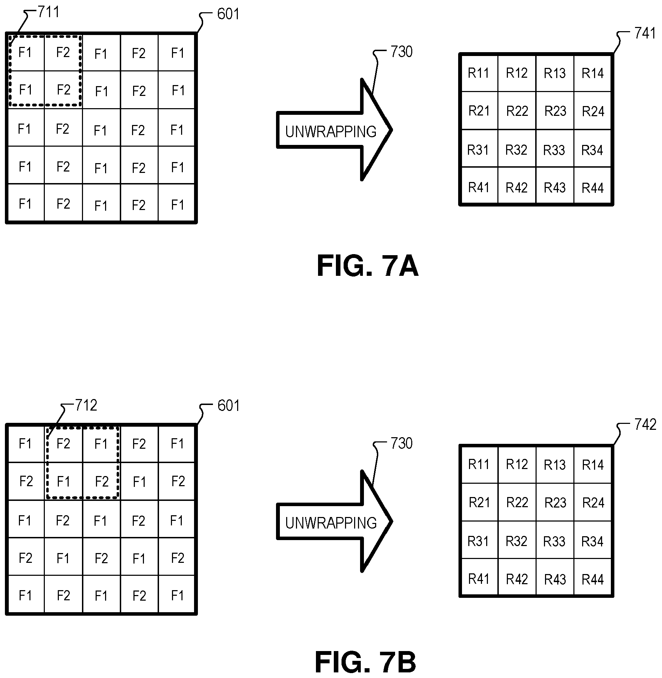

FIGs. 7A-7D illustrate different histograms corresponding to a rolling shutter approach using 2 x 2 macropixels of a pixel group 601. In the illustration of FIG. 7A, macropixel 711 includes four light detectors arranged in a 2 x 2 matrix. First light detectors of macropixel 711 are sampled at a first temporal pulsing frequency (F1) and second light detectors of macropixel 711 are sampled at a second temporal pulsing frequency (F2). Thus, macropixel 711 includes two of the first light detectors and two of the second light detectors. Macropixel 711 is twice the size as macropixel 611. This illustrates that the macropixel may be increased during low SNR environments. The wrapped histograms in FIGs. 7A-7D may be shared in the macropixels 711, 712, 713, and 714 to reduce the number of ToF light pulses required to produce a depth map. This technique may also reduce latency.

FIGs. 7A-7D also includes pixel group 601 having first light detectors are arranged in lines that are adjacent to lines of the second light detectors to facilitate the rolling shutter image capture technique. The lines may be rows or columns, although the lines are illustrated as columns in FIGs. 7A-7D. In some implementation, the wrapped histograms of the first light detectors includes first bin widths and the wrapped histograms of the second light detectors include second bin widths that are different from the first bin widths. In some implementations, the wrapped histograms of the first light detectors include a first integer-number of bins and the wrapped histograms of the second light detectors include a second integer-number of bins that is different than the first integer-number of bins.

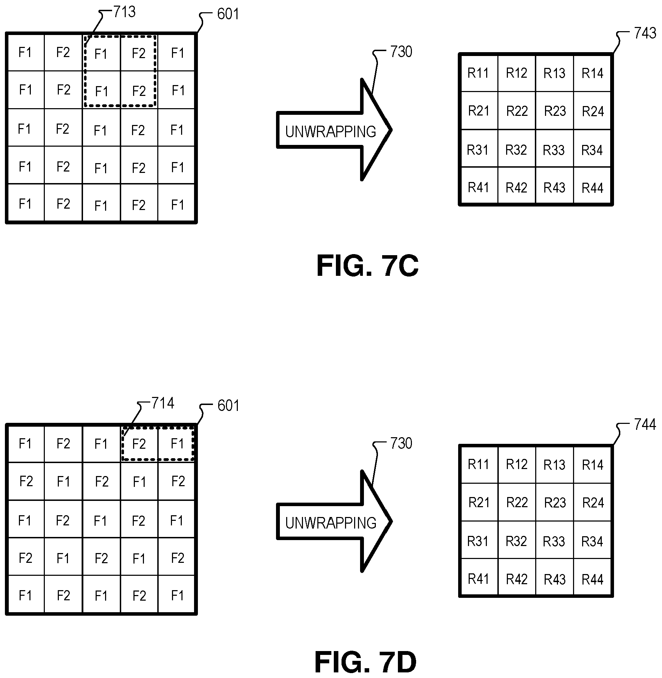

In FIG. 7A, macropixel 711 has a wrapped histogram including the depth values for the four light detectors of macropixel 711. An unwrapping function 730 generates unwrapped histogram 741. In FIG. 7B, macropixel 712 has a wrapped histogram including the depth values for the four light detectors of macropixel 712. The unwrapping function 730 generates unwrapped histogram 742. In FIG. 7C, macropixel 713 has a wrapped histogram including the depth values for the four light detectors of macropixel 713. The unwrapping function 730 generates unwrapped histogram 743. In FIG. 7D, macropixel 714 has a wrapped histogram including the depth values for the four light detectors of macropixel 714. The unwrapping function 730 generates unwrapped histogram 744.

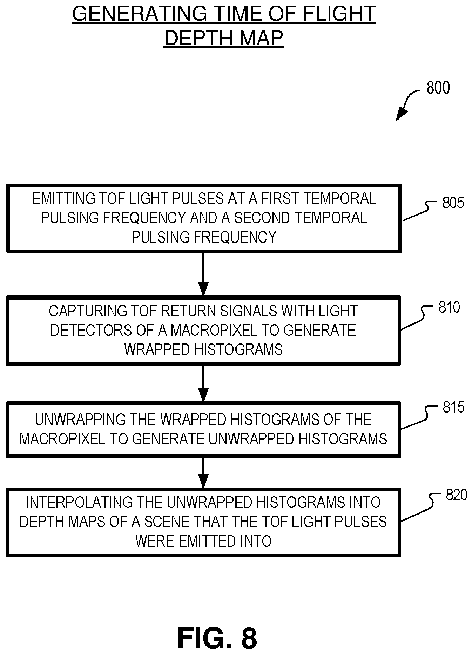

FIG. 8 illustrates a flow chart of an example process 800 of generating a depth map. The order in which some or all of the process blocks appear in process 800 should not be deemed limiting. Rather, one of ordinary skill in the art having the benefit of the present disclosure will understand that some of the process blocks may be executed in a variety of orders not illustrated, or even in parallel.

In process block 805, ToF light pulses are emitted at a first temporal pulsing frequency and a second temporal pulsing frequency.

In process block 810, ToF return signals (e.g. returns signals 267) are captured with light detectors of a macropixel to generate wrapped histograms. The first light detectors of the macropixel are sampled at the first temporal pulsing frequency and the second light detectors of the macropixel are sampled at the second temporal pulsing frequency. In some implementations, the first light detectors are disposed diagonally from each other in the macropixel and the second light detectors are also disposed diagonally from each other in the same macropixel.

In process block 815, the wrapped histograms of the macropixel are unwrapped to generate unwrapped histograms. Unwrapping the wrapped histograms may include converting wrapped depth values generated from the ToF return signals into continuous depth values. In an implementation, the first light detectors and the second light detectors share their wrapped histograms to halve the ToF light pulses that are emitted to populate the wrapped histograms.

In process block 820, unwrapped histograms are interpolated into depth maps of a scene that the ToF light pulses were emitted into. In some implementations, the depth map is of a native resolution of a sensor that includes the light detectors.

In an implementation of process 800, the macropixel has a side represented by integer *n* of the light detectors and the unwrapped histograms that are shared by the first light detectors and the second light detectors is (*n*^2)/2.

In an implementation, process 800 further includes detecting a signal-to-noise ratio (SNR) of the TOF return signals and increasing a size of the macropixel when the SNR is below a pre-determined threshold value.

In an implementation of process 800, the wrapped histograms of the first light detectors include a first integer-number of bins and the wrapped histograms of the second light detectors include a second integer-number of bins that is different than the first integer-number of bins. In another implementation, the wrapped histograms of the first light detectors includes first bin widths and the wrapped histograms of the second light detectors include second bin widths that are different from the first bin widths.

FIG. 9 illustrates a flow chart of an example process 900 of generating a ToF distance. Process 900 may be considered an unwrapping technique for multifrequency direct Time-of-Flight (dToF) that may be utilized with respect to FIGs. 1-8. The order in which some or all of the process blocks appear in process 900 should not be deemed limiting. Rather, one of ordinary skill in the art having the benefit of the present disclosure will understand that some of the process blocks may be executed in a variety of orders not illustrated, or even in parallel.

In process block 905, ToF light pulses are emitted at a first temporal pulsing frequency and a second temporal pulsing frequency. The second temporal pulsing frequency is not colinear with the first temporal pulsing frequency. By way of example, the first temporal pulsing frequency may be 50 MHz and the second temporal pulsing frequency may be 70 MHz which corresponds to wrapping distances of 3.00 m and 2.14 m, respectively. The frequencies are selected based in part on the total distance that is required to unwrap. For 50 MHz and 70 MHz, the total unwrapping distance would be 14.98m. The beat frequency in this example may be 10 MHz since it is the greatest common divisor of the frequencies 50 MHz and 70 MHz.

In process block 910, a ToF distance is calculated corresponding to a time between emitting a particular ToF light pulse and receiving a ToF return signal with a light detector. The light detector may include a single-photon avalanche diode (SPAD), for example.

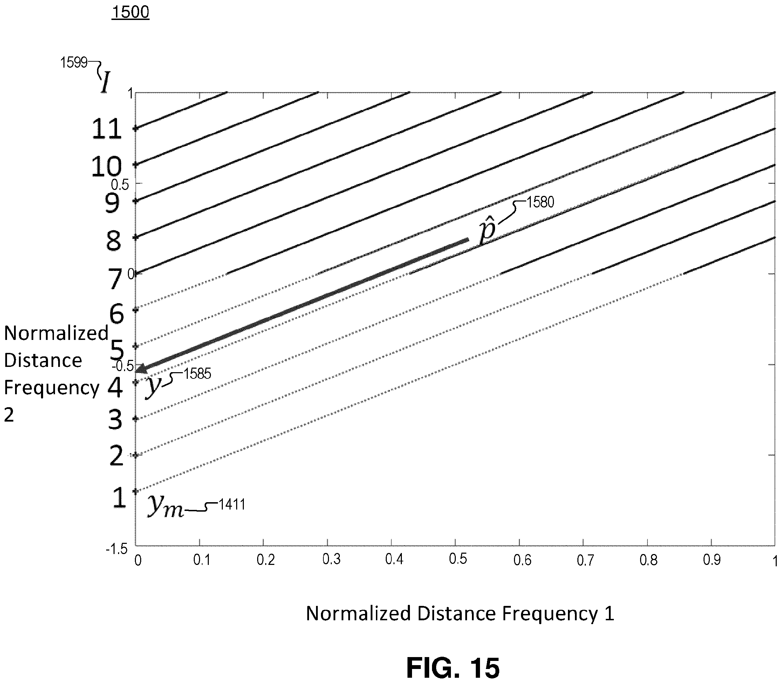

In process block 915, an axis-intercept value is calculated by projecting the ToF distance onto a plot having a first axis representing first normalized distances of the first temporal pulsing frequency and a second axis representing second normalized distances of the second temporal pulsing frequency. As will be described in more detail below, plot 1500 of FIG. 15 is an example plot having an x-axis representing a first normalized distances of a first temporal pulsing frequency and a y-axis representing a second normalized distances of a second temporal pulsing frequency.

In process block 920, a selected index is identified that corresponds to the axis-intercept value. The selected index may represent a doublet combination of a first integer wrap of the first temporal pulsing frequency and a second integer wrap of the second temporal pulsing frequency wrap

In process block 925, the ToF distance is provided to the selected index to retrieve a final ToF distance from the selected index.

In some implementations of process 900, a ToF image (or a portion of a ToF image) is generated corresponding to the final ToF distance. The ToF image may be a mapping of an environment that includes a plurality of ToF distances. In some implementations, the ToF image is fused with a visible-light image captured by a complementary metal-oxide semiconductor (CMOS) image sensor of a ToF system.

In some implementations of process 900, an image is rendered to an HMD in response to the final ToF distance. In an example, the image is a virtual image that is rendered to the HMD and the virtual image is placed within objects of the environment. The ToF distance may assist in placing the virtual image at a suitable location within the environment.

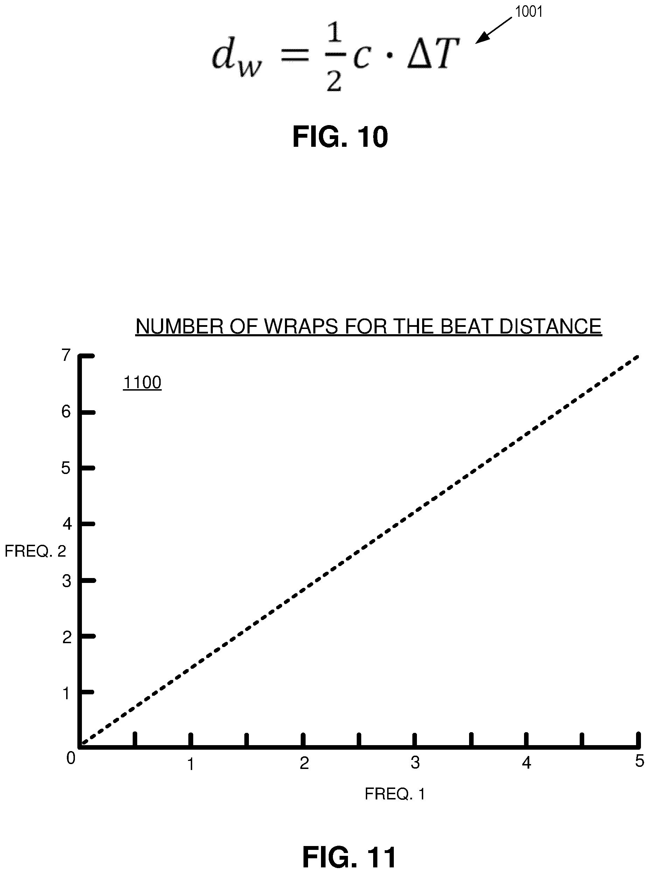

FIGs. 10-20 illustrate examples and further details for executing process 900. FIG. 10 shows an equation 1001 providing a relationship between a wrapping distance, a time period, and the speed of light. Equation 1001 of FIG. 10 shows how to calculate a wrapping distance d_{w} where c is the speed of light and ΔT is the time period representing the inversion of the ToF pulse repetition frequency.

FIG. 11 illustrates a plot 1101 of a number of wraps for a given beat distance. FIG. 11 illustrates the number of wraps for the beat distance in an example where the sampling times for the dToF system has sampling times of 20 and 14.3 ns (corresponding to 50 MHz and 70 MHz, respectively), a beat frequency of 10 MHz, and multipliers of 5 and 7. In FIG. 11, the y-axis is for the 70 MHz frequency (Frequency 2) and the x-axis is for the 50 MHz frequency (Frequency 1).

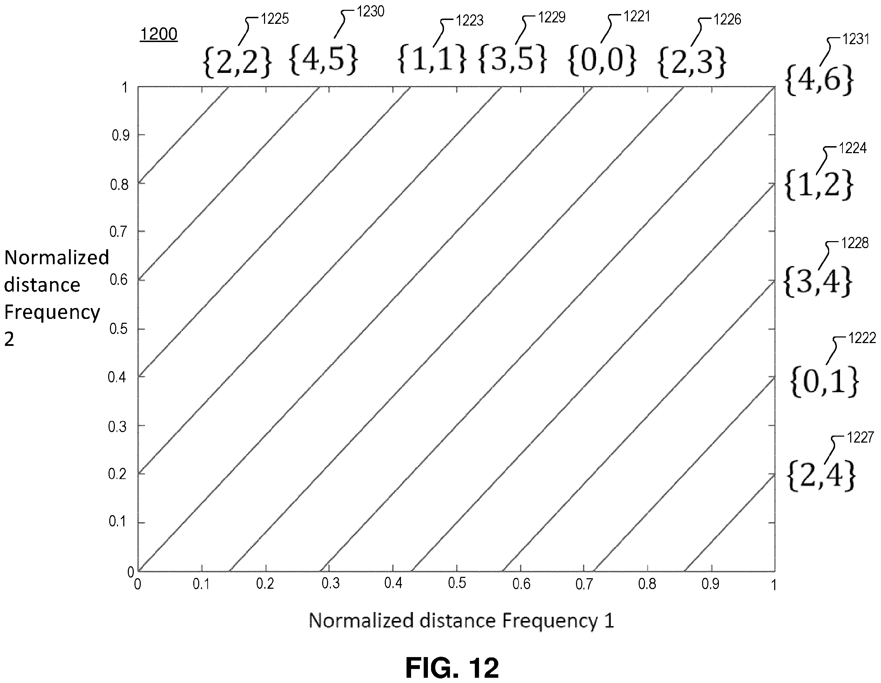

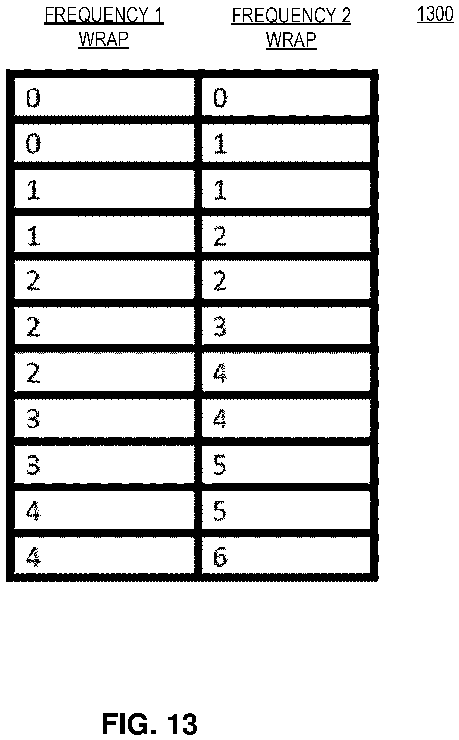

FIG. 12 illustrates a plot 1200 illustrating normalized wrapped distances. Plot 1200 includes parallel lines showing normalized wrapped distance for different doublet combinations. Each line corresponds to a doublet combination of integers of a Frequency 1 wrap and a Frequency 2 wrap. FIG. 13 illustrates a table 1300 showing the doublet combinations of integers for Frequency 1 wraps (first column) and Frequency 2 wraps (second column). Each row of table 1300 represent a different doublet combination. Viewing FIG. 12 and FIG 13 together, the upper left line in plot 1200 corresponds to a doublet combination 1225 of {2,2} that is shown in the fifth row of table 1300. Similarly, moving from upper-left to bottom-right of plot 1200, plot 1200 shows the lines corresponding to: doublet combination 1230 of {4,5} that is shown in the tenth row of table 1300; doublet combination 1223 of {1,1} that is shown in the third row of table 1300; doublet combination 1229 of {3,5} that is shown in the ninth row of table 1300; doublet combination 1221 of {0,0} that is shown in the first row of table 1300; doublet combination 1226 of {2,3} that is shown in the sixth row of table 1300; doublet combination 1231 of {4,6} that is shown in the eleventh row of table 1300; doublet combination 1224 of {1,2} that is shown in the fourth row of table 1300; doublet combination 1228 of {3,4} that is shown in the eighth row of table 1300; doublet combination 1222 of {0,1} that is shown in the second row of table 1300; and doublet combination 1227 of {2,4} that is shown in the seventh row of table 1300.

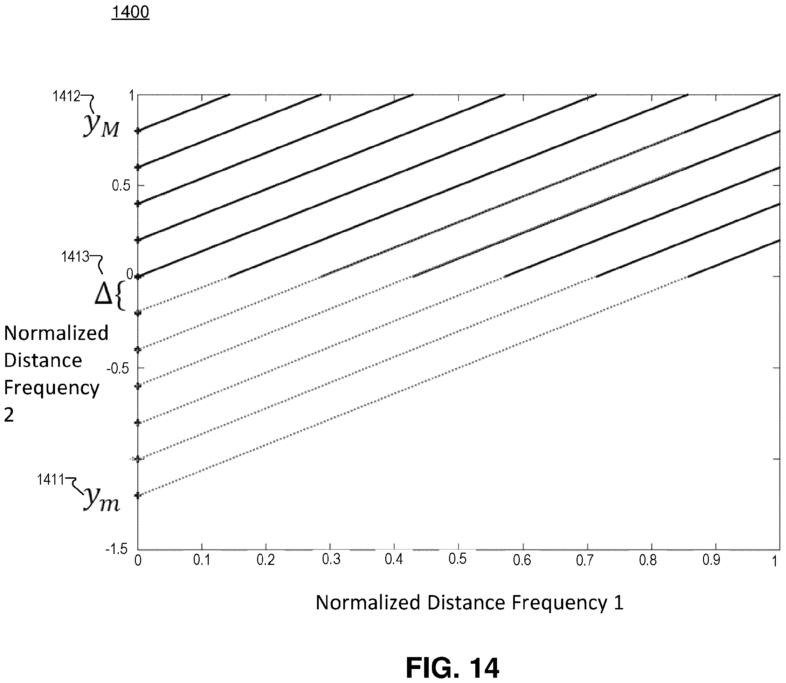

FIG. 14 illustrates a plot 1400 of a projection of the lines of plot 1200 onto an axis. Projecting the lines of plot 1200 onto the y-axis of plot 1400 achieves a dimension reduction that is useful to reduce the number of operations to be executed in the unwrapping process of process 900. Plot 1400 includes a y-minimum 1411 (*y*ₘ) and a y-maximum 1412 (*y*_{M}) of the projection of the lines onto the y-axis of plot 1400. The intersection/projections onto the y-axis provide a scale Δ 1413 (distance in between projections), in plot 1400. In the illustrated example, y-minimum 1411 (*y*ₘ) is -1.2, y-maximum 1413 (*y*_{M}) is 0.8, and Δ 1413 is 0.2. By subtracting by y-minimum 1411 and dividing by Δ 1413, the doublets can be indexed from 1 to 11.

FIG. 15 illustrates a plot 1500 having eleven Indexes (I) 1599. Point 1580 in plot 1500 is a normalized ToF distance graphed onto plot 1500 where point 1580 is generated by one or more ToF times from a ToF sensor.

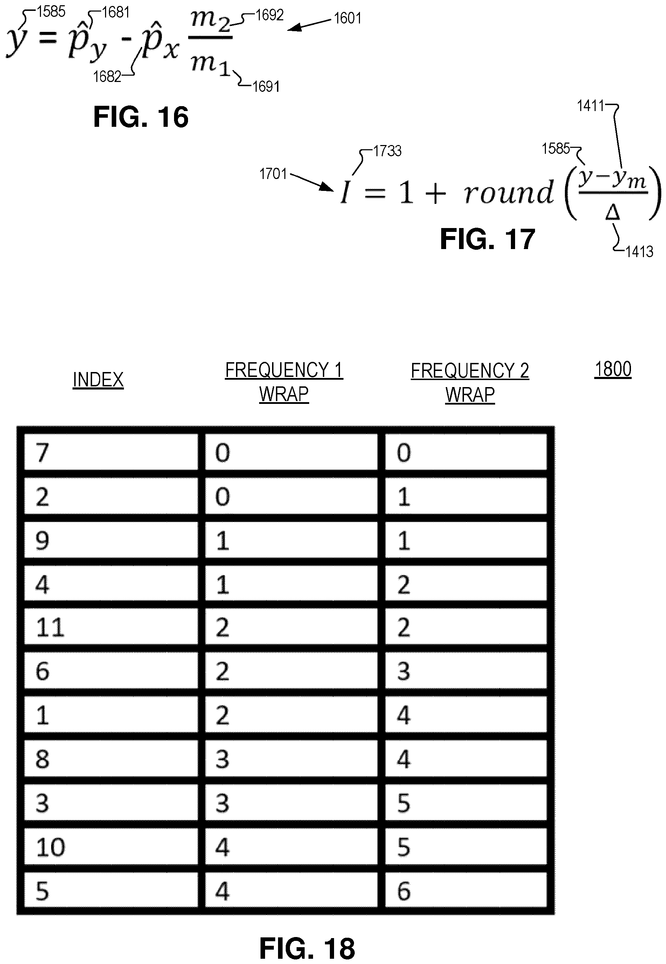

FIG. 16 provides equation 1601 for calculating an axis-intercept value for point 1580. In the example, the axis-intercept value is a y-intercept value. The y-intercept value 1585 for point 1580 can be calculated by subtracting the x-component 1682 of point 1580 multiplied by the ratio of the multipliers *m*₂ 1692 and *m*₁ 1691 from the y-component 1681 of point 1580. In the example where Frequency 1 is 50 MHz and Frequency 2 is 70 MHz, multipliers *m*₂ 1692 and *m*₁ 1691 are 7 and 5, respectively.

FIG. 17 provides equation 1701 for calculating the Index to be selected and used for unwrapping the distance represented by point 1580. In equation 1701, y-minimum 1411 (*y*ₘ) is subtracted from the y-intercept value 1585 calculated by equation 1601. That value is divided by Δ 1413 and rounded to the nearest integer. After adding one to that nearest integer, the Index (I) 1733 is found.

FIG. 18 includes a table 1800 having the eleven Indexes in the first column. The wraps for Frequency 1 and Frequency 2 of a given Index are in the same row as the selected Index 1733 calculated by equation 1701. Thus, Index 7 corresponds to 0 wraps of Frequency 1 and 0 wraps of Frequency 2 whereas Index 5, for example, corresponds to 4 wraps of Frequency 1 and 6 wraps of Frequency 2 according to table 1800. In some implementations, the selected index that is calculated may include a lookup table having distances corresponding to normalized ToF distances. Hence, after the selected Index is calculated, a ToF distance may be provided to the selected index to retrieve the final ToF distance from the selected index. The lookup tables may be calculated and pre-populated into the different indexes according to the design parameters (e.g. Frequency 1, Frequency 2, and beat frequency) of the dToF system that are known. Pre-populating the lookup tables drastically reduces the number of operations required for an unwrapping process.

The lookup tables of the indexes 1-11 may be stored in the memory 217 of FIG. 2, for example. In this example, processing logic 207 may provide the ToF distance and the selected index (calculated by equation 1701) as a query 211 to a lookup table in memory 217 and the lookup table will return the final ToF distance to processing logic 207 in result 213.

Equation 1901 provides the final distance by calculating the weighted sum of the distance provided by the frequencies. The calculation of equation 1901 may also reduce the noise.

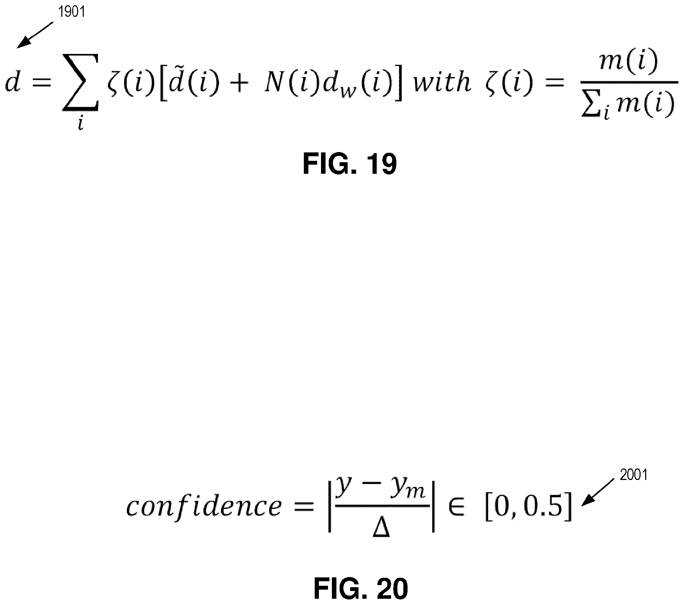

In some implementations, a confidence value for a given distance measurement is calculated according to equation 2001 of FIG. 20. The higher the confidence value (bounded between 0 and 0.5), the less confidence shall be assigned to the measurement. Referring back to FIG. 15, when a point is plotted equidistance between any of the parallel lines corresponding to the indexes 1599, the less certainty there is that the correct Index is being selected since equation 1701 includes a rounding function to the nearest integer. In some implementations, a confidence value approaching 0.5 will cause a given measurement to be discarded and a new ToF measurement will be initiated to ascertain the ToF distance.

In some implementations of process 900 of FIG. 9, generating the axis-intercept value includes: (1) generating a first value by multiplying a first-axis component of the ToF distance with a multiplier factor that is a ratio of a first multiplier and a second multiplier that are greatest common divisor of a beat frequency of the ToF light pulses; and (2) subtracting the first value from a second-axis component of the ToF distance to generating the axis-intercept value. The first-axis component in this implementation may be x-component 1682 of point 1580 and the multiplier factor may be the ratio of the multipliers *m*₂ 1692 and *m*₁ 1691, in equation 1601.

In some implementations of process 900, identifying the selected index corresponding to the axis-intercept value includes: (1) subtracting the axis-intercept value by a range minimum of the second axis to generate a y-value; (2) dividing the y-value by a delta between projections of different indexes to generate a first value; (3) rounding the first value to a nearest integer to generate a second value; and (4) adding one to the second value to generate the selected index. In this implementation, the range minimum may be y-minimum 1411 (*y*ₘ), the y-value may be y-intercept value 1585, and the delta may be Δ 1413.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

The term "processing logic" (e.g. logic 107 or 207) in this disclosure may include one or more processors, microprocessors, multi-core processors, Application-specific integrated circuits (ASIC), and/or Field Programmable Gate Arrays (FPGAs) to execute operations disclosed herein. In some embodiments, memories (not illustrated) are integrated into the processing logic to store instructions to execute operations and/or store data. Processing logic may also include analog or digital circuitry to perform the operations in accordance with embodiments of the disclosure.

A "memory" or "memories" (e.g. memory 217) described in this disclosure may include one or more volatile or non-volatile memory architectures. The "memory" or "memories" may be removable and non-removable media implemented in any method or technology for storage of information such as computer-readable instructions, data structures, program modules, or other data. Example memory technologies may include RAM, ROM, EEPROM, flash memory, CD-ROM, digital versatile disks (DVD), high-definition multimedia/data storage disks, or other optical storage, magnetic cassettes, magnetic tape, magnetic disk storage or other magnetic storage devices, or any other non-transmission medium that can be used to store information for access by a computing device.

Networks may include any network or network system such as, but not limited to, the following: a peer-to-peer network; a Local Area Network (LAN); a Wide Area Network (WAN); a public network, such as the Internet; a private network; a cellular network; a wireless network; a wired network; a wireless and wired combination network; and a satellite network.

Communication channels may include or be routed through one or more wired or wireless communication utilizing IEEE 802.11 protocols, short-range wireless protocols, SPI (Serial Peripheral Interface), I²C (Inter-Integrated Circuit), USB (Universal Serial Port), CAN (Controller Area Network), cellular data protocols (e.g. 3G, 4G, LTE, 5G), optical communication networks, Internet Service Providers (ISPs), a peer-to-peer network, a Local Area Network (LAN), a Wide Area Network (WAN), a public network (e.g. "the Internet"), a private network, a satellite network, or otherwise.

A computing device may include a desktop computer, a laptop computer, a tablet, a phablet, a smartphone, a feature phone, a server computer, or otherwise. A server computer may be located remotely in a data center or be stored locally.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

A tangible non-transitory machine-readable storage medium includes any mechanism that provides (i.e., stores) information in a form accessible by a machine (e.g., a computer, network device, personal digital assistant, manufacturing tool, any device with a set of one or more processors, etc.). For example, a machine-readable storage medium includes recordable/non-recordable media (e.g., read only memory (ROM), random access memory (RAM), magnetic disk storage media, optical storage media, flash memory devices, etc.).

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention, as those skilled in the relevant art will recognize.

These modifications can be made to the invention in light of the above detailed description. The terms used in the following claims should not be construed to limit the invention to the specific embodiments disclosed in the specification. Rather, the scope of the invention is to be determined entirely by the following claims, which are to be construed in accordance with established doctrines of claim interpretation.

## Claims

1. A Time-of-Flight, ToF, method comprising:
emitting ToF light pulses at a first temporal pulsing frequency and a second temporal pulsing frequency;
calculating a ToF distance corresponding to a time between emitting a particular ToF light pulse and receiving a ToF return signal with a light detector;
generating an axis-intercept value by projecting the ToF distance onto a plot having a first axis representing first normalized distances of the first temporal pulsing frequency and a second axis representing second normalized distances of the second temporal pulsing frequency;
identifying a selected index corresponding to the axis-intercept value; and
providing the ToF distance to the selected index to retrieve a final ToF distance from the selected index.

2. The method of claim 1, wherein the second temporal pulsing frequency is not colinear with the first temporal pulsing frequency.

3. The method of claim 1 or claim2 , wherein the selected index represents a doublet combination of a first integer wrap of the first temporal pulsing frequency and a second integer wrap of the second temporal pulsing frequency wrap.

4. The method of any preceding claim, wherein generating the axis-intercept value includes:
generating a first value by multiplying a first-axis component of the ToF distance with a multiplier factor that is a ratio of a first multiplier and a second multiplier that are greatest common divisor of a beat frequency of the ToF light pulses; and
subtracting the first value from a second-axis component of the ToF distance to generating the axis-intercept value.

5. The method of any preceding claim, wherein:
identifying the selected index corresponding to the axis-intercept value includes:
subtracting the axis-intercept value by a range minimum of the second axis to generate a y-value;
dividing the y-value by a delta between projections of different indexes to generate a first value;
rounding the first value to a nearest integer to generate a second value; and
adding one to the second value to generate the selected index,
and/or wherein the selected index includes a lookup table having distances corresponding to normalized ToF distances.

6. The method of any preceding claim further comprising:
generating a ToF image corresponding to the final ToF distance, and optionally further comprising:
fusing the ToF image with a visible light image captured by a complementary metal-oxide semiconductor, CMOS, image sensor.

7. The method of any preceding claim further comprising:
rendering an image to a head-mounted display in response to the final ToF distance.

8. The method of any preceding claim, wherein the light detector includes a single-photon avalanche diode, SPAD.

9. A Time-of-Flight, ToF, system comprising:
an illumination module configured to emit ToF light pulses at a first temporal pulsing frequency and a second temporal pulsing frequency;
a ToF sensor configured to detect ToF return signals of the ToF light pulses reflecting back to the ToF sensor; and
processing logic configured to:
calculate a ToF distance corresponding to a time between emitting a particular ToF light pulse and receiving the ToF return signals with the ToF sensor;
generate an axis-intercept value by projecting the ToF distance onto a plot having a first axis representing first normalized distances of the first temporal pulsing frequency and a second axis representing second normalized distances of the second temporal pulsing frequency;
identify a selected index corresponding to the axis-intercept value; and
provide the ToF distance to the selected index to retrieve a final ToF distance from the selected index.

10. A method of generating a depth map, the method comprising:
emitting ToF light pulses at a first temporal pulsing frequency and a second temporal pulsing frequency;
capturing ToF return signals with light detectors of a macropixel to generate wrapped histograms, wherein first light detectors of the macropixel are sampled at the first temporal pulsing frequency, and wherein second light detectors of the macropixel are sampled at the second temporal pulsing frequency;
unwrapping the wrapped histograms of the macropixel to generate unwrapped histograms; and
interpolating the unwrapped histograms into depth maps of a scene that the ToF light pulses were emitted into.

11. The method of claim 10, wherein the first light detectors and the second light detectors share their wrapped histograms to halve the ToF light pulses that are emitted to populate the wrapped histograms,
and optionally wherein the macropixel has a side represented by integer *n* of the light detectors, and wherein the unwrapped histograms that are shared by the first light detectors and the second light detectors is (*n*^2)/2.

12. The method of claim 10 or claim 11 further comprising:
detecting a signal-to-noise ratio, SNR, of the TOF return signals; and
increasing a size of the macropixel when the SNR is below a pre-determined threshold value.

13. The method of any of claims 10 to 12, wherein:
the depth map is of a native resolution of a sensor that includes the light detectors.

14. The method of any of claims 10 to 13, wherein the first light detectors are adjacent to the second light detectors of the micropixel,
and optionally wherein the first light detectors are disposed diagonally from each other in the macropixel, and wherein the second light detectors are disposed diagonally from each other in the macropixel.

15. The method of any of claims 10 to 14, wherein:
unwrapping the wrapped histograms includes converting wrapped depth values generated from the ToF return signals into continuous depth values, and/or
the wrapped histograms of the first light detectors include a first integer-number of bins, and wherein the wrapped histograms of the second light detectors include a second integer-number of bins that is different than the first integer-number of bins.
